# EUROPÄISCHE PATENTSCHRIFT

(11) **EP 2 551 177 B1**
(45) Veröffentlichungstag und Bekanntmachung des Hinweises auf die Patenterteilung: **07.01.2015**
(21) Anmeldenummer: 12005542.1
(22) Anmeldetag: 30.07.2012
(51) Int. Cl.: B62M 6/70, B62K 5/02

(54) **Dreirad**
Tricycle
Tricyclette

(30) Priorität: 29.07.2011 DE 202011103837 U
(43) Veröffentlichungstag der Anmeldung: 30.01.2013
(73) Patentinhaber: Munding, Stefan, 44795 Bochum (DE)
(72) Erfinder: Munding, Stefan, 44795 Bochum (DE)
(74) Vertreter: Isfort, Olaf

(56) Entgegenhaltungen:
- EP-A1- 0 928 737
- EP-A1- 1 151 912
- EP-A2- 0 955 232
- EP-B1- 0 941 198
- WO-A1-93/01965
- JP-A- 9 156 563
- JP-A- 9 207 862
- JP-A- 60 174 377
- JP-U- 51 017 947
- JP-U- 51 022 240
- JP-U- 51 106 447
- JP-U- 51 139 548
- US-A- 3 880 449

## Beschreibung

Die Erfindung betrifft ein Dreirad mit einem ein Vorderrad haltenden Vorderteil und einem zwei Hinterräder haltenden Hinterteil, wobei das Vorderteil über ein Gelenk mit dem Hinterteil verbunden ist, wobei das Gelenk eine Verschwenkung des Vorderteils relativ zu dem Hinterteil um eine im Wesentlichen in Längsrichtung des Dreirades ausgerichtete Schwenkachse ermöglicht, wobei das Vorderteil über einen bezüglich der vorwärtsgerichteten Fahrtrichtung des Dreirades rechts angeordneten Zugmitteltrieb mit dem Hinterteil verbunden ist, wobei der Zugmitteltrieb ausschließlich mit dem bezüglich der vorwärtsgerichteten Fahrtrichtung des Dreirades links angeordneten linken Hinterrad gekoppelt ist. Dokument JP9207862 A offenbart ein Dreirad gemäß dem Oberbegriff von Anspruch 1.

Aufgabe der Erfindung ist es, ein Dreirad mit einem neuartigen Antriebsmechanismus bereitzustellen.

Diese Aufgabe wird bei einem Dreirad der eingangs genannten Art erfindungsgemäß dadurch gelöst, dass der Zugmitteltrieb abtriebseitig ein Freilaufritzel aufweist, das an einem Endabschnitt einer ortsfest am Hinterteil angeordneten Antriebswelle angeordnet ist, an deren anderem Endabschnitt ein zweites Freilaufritzel eines zweiten Zugmitteltriebs angeordnet ist, über den die Antriebswelle mit dem linken Hinterrad verbunden ist, wobei an dem Hinterteil ein Hilfsmotor angeordnet ist, der auf die Antriebswelle über einen dritten Zugmitteltrieb einwirkt, wobei der dritte Zugmitteltrieb ein drittes Freilaufritzel aufweist, das an der Antriebswelle angeordnet ist.

Über die Antriebswelle lässt sich die vom Zugmitteltrieb herrührende Antriebskraft auf einfache Art und Weise von der bezüglich der vorwärtsgerichteten Fahrtrichtung des Dreirades rechten Seite des Dreirades auf die linke Seite desselben verlagern, um das linke Hinterrad antreiben zu können. Der Antrieb des linken Hinterrades kann mittels des Zugmitteltriebes und/oder des Hilfsmotors über ein und dieselbe Antriebswelle erfolgen. Vorzugsweise ist der Hilfsmotor ein bürstenloser Dreiphasenmotor, der über eine elektronische Regelung regelbar ist. Besonders bevorzugt sind der Hilfsmotor und die elektronische Regelung mit einer Pedelec-Funktion ausgestattet. Pedelec (Pedal Electric Cycle) ist eine allgemeine Bezeichnung für ein Elektrofahrrad, welches hybrid mittels Elektromotor und Muskelkraft angetrieben werden kann. Die Pedelec-Funktion ist dadurch gekennzeichnet, dass der Hilfsmotor ohne Kurbelbewegungen der Tretkurbeln zum Antreiben des Zugmitteltriebes keine Leistung abgibt, sondern nur unterstützend eingreift, wenn die Tretkurbeln des Dreirades bewegt werden. Als linkes Hinterrad des Dreirades kann ein herkömmliches Fahrradrad verwendet werden, bei dessen funktionsgemäßer Anordnung das an der Radnabe angeordnete Antriebsritzel in Fahrtrichtung grundsätzlich auf der rechten Seite angeordnet ist. Sollte mit dem bezüglich der vorwärtsgerichteten Fahrtrichtung des Dreirades auf der rechten Seite des Dreirades angeordneten Zugmitteltrieb das auf der rechten Seite des Dreirades befindliche rechte Hinterrad angetrieben werden, müsste aufgrund der hierfür erforderlichen kinematischen Umkehrung des Antriebsmechanismus von herkömmlichen Fahrradrädern ein neuartiges, spezielles Hinterrad entwickelt und hergestellt werden oder es müsste eine Kopplung des Zugmitteltriebs auf eine Art und Weise derart durchgeführt werden, dass die Kraft von dem Zugmitteltrieb irgendwie auf die rechte Außenseite des rechten Hinterrades übertragen werden kann. Letzteres stellt sich konstruktiv sehr aufwendig und damit kostenintensiv dar. Folglich ist der Antriebsmechanismus des erfindungsgemäßen Dreirades und somit das Dreirad selbst unter Verwendung herkömmlicher Bauteile von Fahrrädern und damit kostengünstig herstellbar. Zudem kann bei einem Schaden an dem Dreirad eine Reparatur desselben unter Verwendung herkömmlicher Ersatzteile kostengünstig erfolgen. Die Antriebswelle ist vorzugsweise rohrförmig ausgebildet ist.

Gemäß einer vorteilhaften Ausgestaltung der Erfindung weist das linke Hinterrad eine Nabenschaltung auf. Ist das Dreirad mit einem Hilfsmotor versehen, kann sowohl die von dem Zugmitteltrieb, als auch die von dem Hilfsmotor ausgehende Kraft über die Nabenschaltung auf das linke Hinterrad übertragen werden. Auch hier kann auf herkömmliche Funktionalitäten von Fahrradrädern mit Nabenschaltungen zurückgegriffen werden, was bislang insbesondere bei Dreirädern, die mittels eines Elektromotors in Form eines Nabenmotors angetrieben wurden, nicht realisierbar ist.

Eine weitere vorteilhafte Ausgestaltung der Erfindung sieht vor, dass das bezüglich der vorwärtsgerichteten Fahrtrichtung des Dreirades rechts angeordnete Hinterrad einen Nabendynamo aufweist. Über diesen können beispielsweise Beleuchtungseinrichtungen des Dreirades oder auch ein den Hilfsmotor mit Energie versorgender Energiespeicher mit elektrischer Energie aufgeladen werden.

Nach einem weiteren Aspekt der Erfindung sind die Hinterräder jeweils über wenigstens einen Lenker, nämlich einen Längs- oder Querlenker, vorzugsweise einen Dreieckslenker, und einen Stoßdämpfer mit dem Hinterteil verbunden. Auch kann vorgesehen sein, die Hinterräder jeweils über zwei Dreieckslenker und einen Stoßdämpfer mit dem Hinterteil zu verbinden. Unter einem Stoßdämpfer kann dabei insbesondere eine Feder-/Dämpferkombination zu verstehen sein, wie sie im Fahrzeugbau allgemein üblich ist. Diese federnde Lagerung der Hinterräder dient der Erhöhung des Fahrkomforts des Dreirads.

Bevorzugt sind die Hinterräder jeweils über zwei zueinander parallele Dreieckslenker (z.B. Dreiecksquerlenker) mit dem Hinterteil verbunden. Die parallel zueinander um horizontale Achsen verschwenkbaren Dreieckslenker gewährleisten auf konstruktiv einfache Weise für jedes Rad eine Parallelführung bei der vertikalen Federbewegung.

Vorzugsweise sind die Hinterräder jeweils an einem Radträger angeordnet, der mit beiden Enden der Radachse eines Hinterrades verbunden ist. Besonders bevorzugt ist der Radträger U-förmig ausgebildet. Es kann jedoch auch vorgesehen sein, dass der Radträger ein Hinterrad von oben über einen gewissen Umfang umgibt, um beispielsweise einen Spritzschutz auszubilden und zu verhindern, dass ein Körperteil oder mit dem Dreirad transportierte Gegenstände in Kontakt mit den Hinterrädern kommen können. Vorzugsweise sind der Lenker und der Stoßdämpfer mit dem Radträger verbunden.

Nach einer weiteren vorteilhaften Ausgestaltung der Erfindung sind der Hilfsmotor, die Lenker, die Stoßdämpfer und die Antriebswelle gemeinsam an einer einstückig ausgebildeten Trageinheit angeordnet. Dieses stellt eine sehr einfache und dennoch sehr robuste Ausgestaltung des Dreirades dar. Die Trageinheit kann durch mehrere miteinander verschweißte Elemente gebildet sein.

Von Vorteil ist, wenn das Dreirad einen an dem Hinterteil angeordneten, parallel zu dem oben beschriebenen ersten Hilfsmotor geschalten zweiten Hilfsmotor aufweist, der auf die Antriebswelle über einen vierten Zugmitteltrieb einwirkt, wobei der vierte Zugmitteltrieb ein viertes Freilaufritzel aufweist, das an der Antriebswelle angeordnet ist. Hierdurch können zwei Hilfsmotoren mit geringeren Leistungen und dem damit einhergehenden geringen Platzbedarf verwendet werden, um den Antriebsmechanismus bzgl. der Hilfsmotoren möglichst kompakt ausbilden zu können.

An der Antriebswelle sind vorzugsweise Außengewinde angeordnet, über die die Freilaufritzel an der Antriebswelle befestigbar sind.

Es wird weiter vorgeschlagen, dass das Dreirad eine Federung zur federnden Lagerung des Vorderrades aufweist. Auch hierdurch wird der mit dem Dreirad verbundene Fahrkomfort deutlich verbessert.

Um die Verkehrssicherheit des Dreirades, insbesondere wegen dessen hohen Gewichts, zu verbessern, wird vorgeschlagen, dass an dem Vorderrad und/oder den Hinterrädern mechanische oder hydraulische Scheibenbremsen angeordnet sind. Die Bremskräfte solcher Scheibenbremsen sind bekanntermaßen deutlich größer als bei der Verwendung herkömmlicher Felgenbremsen oder dergleichen. Das Dreirad kann so beispielsweise auch als Transportfahrzeug eingesetzt werden, wobei das Bremsverhalten des Dreirades auch bei größeren zu transportierenden Lasten sehr gut ist.

Ferner wird es als vorteilhaft erachtet, wenn am Lenker des Dreirades eine Steuereinrichtung zum Steuern der elektronischen Regelung angeordnet ist. Über die Steuereinrichtung kann beispielsweise der Hilfsmotor ein- oder ausgeschaltet werden. Auch lässt sich über die Steuereinrichtung die Leistungsabgabe des Hilfsmotors regulieren. Zudem kann über eine solche Steuereinrichtung die oben beschriebene Pedelec-Funktion aktiviert oder deaktiviert werden.

Bei einem weiteren Aspekt der Erfindung ist eine Arretierung vorgesehen, die den Winkel der Verschwenkung des Vorderteils relativ zu dem Hinterteil einschränkt, wobei der maximale Winkel der Verschwenkung einstellbar ist. Die Einschränkung der Schwenkbewegung kann aus Sicherheitsgründen oder auch aus Gründen der subjektiv vom Fahrer empfundenen Stabilität des Dreirads, sei es beim Besteigen desselben oder auch während der Fahrt, vorteilhaft sein. Gerade bei älteren Personen, bei denen zum Teil motorische Defizite und mehr oder weniger ausgeprägte Koordinationsprobleme bestehen können, ist zu berücksichtigen, dass das Dreirad mit relativ verschwenkbarem Vorder- und Hinterteil als instabil und damit unsicher empfunden wird, obwohl es tatsächlich fahrdynamisch und damit auch hinsichtlich der Fahrsicherheit einem Dreirad ohne Möglichkeit der Verschwenkung weit überlegen ist. Besonders sinnvoll ist es dann, dem Fahrer des Deirades die Möglichkeit zu geben, die Verschwenkung wahlweise ganz zu blockieren. Das Dreirad steht dann vollkommen stabil und kann vom Fahrer mühelos bestiegen werden. Zum Fahren kann dann mittels entsprechender Einstellung der Arretierung der maximal zulässige Schwenkwinkel individuell eingestellt werden, so dass sich subjektiv und objektiv ein sicheres Fahrverhalten ergibt.

Bei einer besonders einfachen und kostengünstigen Variante der Arretierung weist diese einen parallel zur Schwenkachse und seitlich versetzt zu dieser angeordneten Bolzen auf, der am Hinterteil oder am Vorderteil axial beweglich geführt ist und der in eine am jeweils anderen Teil, d.h. am Vorder- bzw. Hinterteil angeordnete Stufenbohrung einfahrbar ist. Der maximale Schwenkwinkel hängt davon ab, wie tief der Bolzen in die Stufenbohrung eingefahren wird. Bei ganz eingefahrenem Bolzen ist die Schwenkbewegung vollständig blockiert. Bei teilweise eingefahrenem Bolzen ergibt sich der maximale Schwenkwinkel aus dem Durchmesser der Stufenbohrung in der entsprechenden Tiefe. Bei ganz ausgefahrenem Bolzen sind Vorder- und Hinterteil relativ zueinander frei beweglich. Die Axialbewegung des Bolzens kann besonders einfach vom Fahrer mittels eines in den Bedienbereich des Dreirads (z.B. zum Lenker) geführten Bowdenzugs gesteuert werden. Hierzu eignet sich ein Bedienelement ähnlich demjenigen einer herkömmlichen Nabenschaltung.

Die Erfindung wird im Folgenden anhand der in den beiliegenden Figuren gezeigten Ausführungsbeispiele näher erläutert. Dabei zeigen
- Figur 1:: eine schematische Darstellung eines Ausschnitts eines Ausführungsbeispiels des erfindungsgemäßen Dreirads von oben,
- Figur 2:: das in Figur 1 gezeigte Ausführungsbeispiel in einer Seitenansicht,
- Figur 3:: einen Detailausschnitt einer Radaufhängung des in den Figuren 1 und 2 gezeigten Ausführungsbeispiels,
- Figur 4:: eine erste Variante eines Radträgers des erfindungsgemäßen Dreirads,
- Figur 5:: eine zweite Variante des Radträgers,
- Figur 6:: Schwenkwinkelarretierung des erfindungsgemäßen Dreirads.

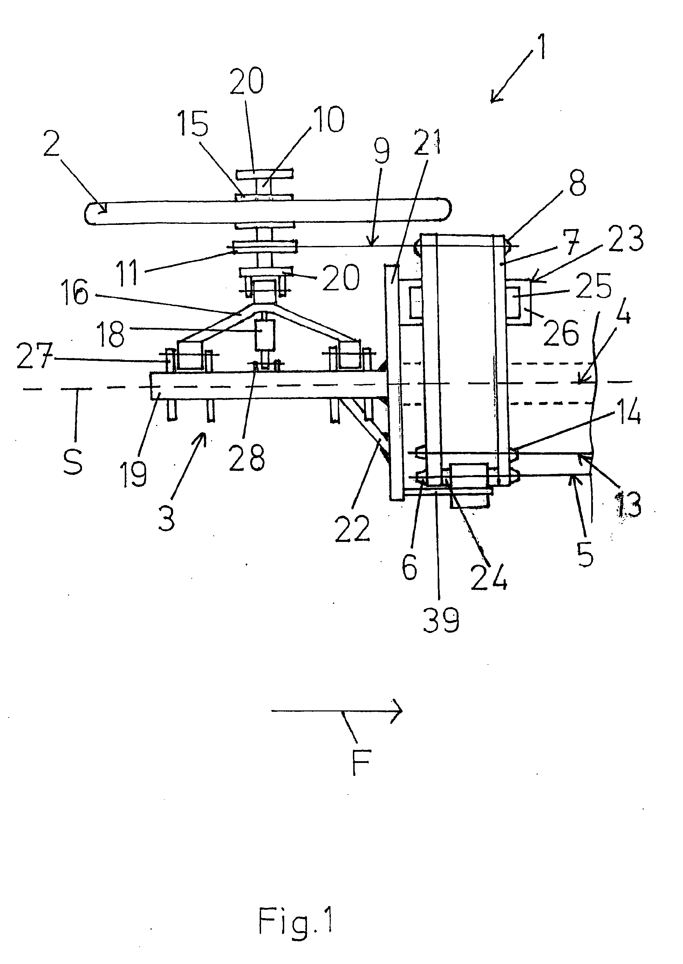

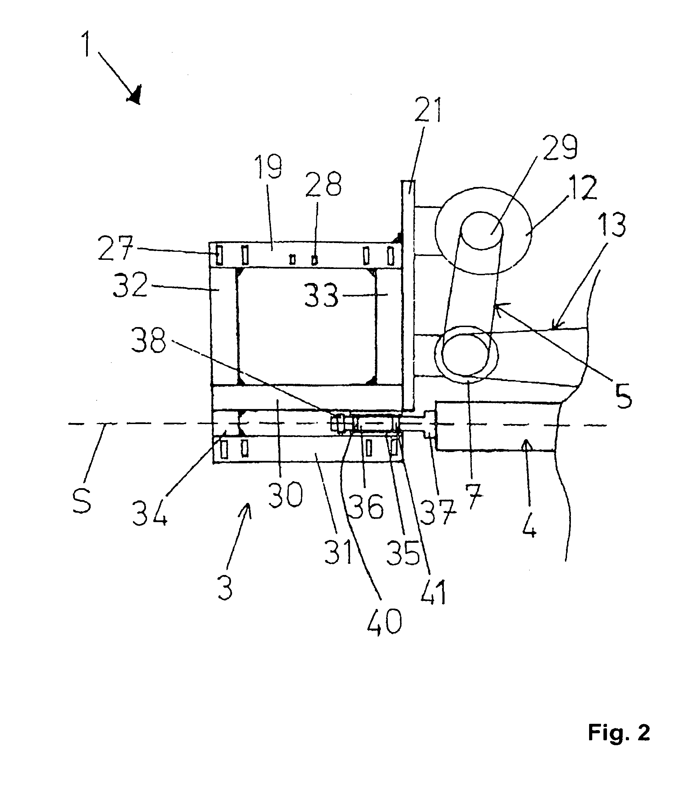

Figur 1 zeigt schematisch eine Ansicht eines Detailausschnitts eines Ausführungsbeispiels für das erfindungsgemäße Dreirad 1 von oben. Das Dreirad 1 umfasst ein die Hinterräder 2 haltendes Hinterteil 3 und ein ein nicht gezeigtes Vorderrad haltendes Vorderteil 4. Das Vorderteil 4 ist über ein Gelenk mit dem Hinterteil 3 verbunden, was deutlicher aus Figur 2 hervorgeht, wobei das Gelenk eine Verschwenkung des Vorderteils 4 relativ zum Hinterteil 3 um die im Wesentlichen in Längsrichtung des Dreirades 1 ausgerichtete Schwenkachse S ermöglicht.

Das Vorderteil 4 ist über einen bezüglich der vorwärtsgerichteten Fahrtrichtung F des Dreirades 1 rechts angeordneten Zugmitteltrieb 13 mit dem Hinterteil 3 verbunden. Der Zugmitteltrieb 13 ist ausschließlich mit dem bezüglich der vorwärtsgerichteten Fahrtrichtung F des Dreirades 1 links angeordneten linken Hinterrad 2 gekoppelt. Hierzu weist der Zugmitteltrieb 13 abtriebseitig ein Freilaufritzel 14 auf, das an einem Endabschnitt einer ortsfest an dem Hinterteil 3 angeordneten, rohrförmig ausgebildeten Antriebswelle 7 gelagert ist. An dem anderen Endabschnitt der Antriebswelle 7 ist ein zweites Freilaufritzel 8 eines zweiten Zugmitteltriebes 9 angeordnet, über den die Antriebswelle 7 mit dem linken Hinterrad 2 verbunden ist. Hierzu umfasst der zweite Zugmitteltrieb 9 ein auf der Achse 10 des linken Hinterrades 2 angeordnetes Antriebsritzel 11.

An dem Hinterteil 3 ist der in Figur 2 gezeigte Hilfsmotor 12 angeordnet, der auf die Antriebswelle 7 über einen dritten Zugmitteltrieb 5 einwirkt. Der dritte Zugmitteltrieb 5 weist ein drittes Freilaufritzel 6 auf, das an der Antriebswelle 7 angeordnet ist. Das linke Hinterrad 2 weist eine Nabenschaltung 15 auf und ist über zwei Dreieckslenker 16 und 17, von denen nur der obere Dreieckslenker 16 in Figur 1 zu sehen ist, und einen Stoßdämpfer 18 mit dem Träger 19 des Hinterteils 3 verbunden. Auf die gleiche Weise wie das linke Hinterrad 2 kann auch das nicht gezeigte rechte Hinterrad über Dreieckslenker und einen Stoßdämpfer mit dem Träger 19 verbunden werden.

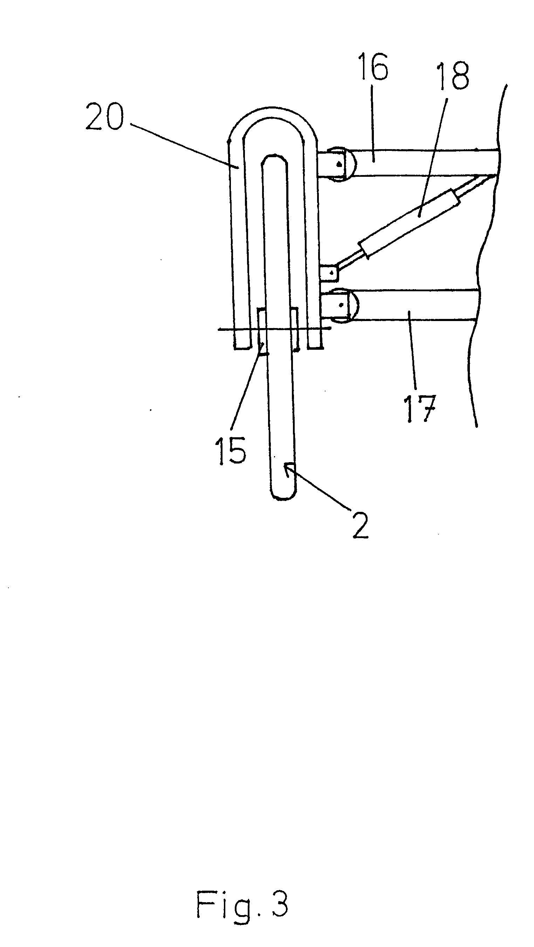

Das linke Hinterrad 2 ist an einem U-förmig ausgebildeten Radträger 20 angeordnet, der mit beiden Enden der Radachse 10 des linken Hinterrades 2 verbunden ist, was besser ersichtlich aus Figur 3 ist. Die Dreieckslenker 16 und 17 und der Stoßdämpfer 18 sind mit dem Radträger 20 verbunden. Der Träger 19 ist mit einer Trägerplatte 21 verbunden. Zwischen dem Träger 19 und der Trägerplatte 21 sind Stützstreben 22 zur Stabilisierung des Hinterteils 3 angeordnet. An dem Träger 19 sind Vorsprünge 27 und 28 angeordnet, an denen die Dreieckslenker 16 und 17 beziehungsweise die Stoßdämpfer 18 schwenkbeweglich befestigt werden können. Die Antriebswelle 7 ist über die Lager 23 und 24 drehbar an der Trägerplatte 21 und damit ortsfest an dem Hinterteil 3 gelagert. Das Lager 23 ist als Gehäuselager (z.B. kommerziell erhältliches Gehäuselager der Marke NBR) ausgebildet und umfasst ein in einem an der Trägerplatte 21 befestigten Gehäuse 26 angeordnetes Wälzlager 25. Das Lager 24 umfasst wenigstens ein Wälzlager, welches in der rohrförmig ausgebildeten Antriebswelle 7 angeordnet und über den Arm 39 an der Trägerplatte 21 festgelegt ist. Statt des Lagers 24 kann jedoch auch ein zweites Lager entsprechend Lager 23 verwendet und entsprechend angeordnet werden.

Figur 2 zeigt eine Seitenansicht eines Details des in Figur 1 gezeigten Ausführungsbeispiels für das erfindungsgemäße Dreirad 1. Es ist der Hilfsmotor 12 mit seinem Antriebsritzel 29 zu sehen, welches Teil des dritten Zugmitteltriebs 5 ist. Der Hilfsmotor 12 ist ebenso an der Trägerplatte 21 befestigt. Das Hinterteil 3 weist des Weiteren einen zum Träger 19 parallel angeordneten Träger 30 und einen weiteren dazu parallel angeordneten Träger 31 auf. Die Träger 19, 30 und 31 sind als Rechteckprofile ausgebildet. Sie sind über weitere Rechteckprofile 32 bis 34 miteinander verbunden. Zwischen den Trägern 30 und 31 ist ein Rohr 35 befestigt, in dem ein Schraubbolzen 36 über zwei Wälzlager 40 und 41 um die Schwenkachse S drehbar gelagert ist. Der Bolzenkopf 37 ist mit dem Vorderteil 4 drehfest verbunden. Auf das andere Ende des Bolzens 36 ist eine Mutter 38 aufgeschraubt. Durch die Anordnung des Schraubbolzens 36 in dem Rohr 35 wird im Wesentlichen das Gelenk ausgebildet, das ein Verschwenken des Vorderteils 4 relativ zum Hinterteil 3 um die Schwenkachse S ermöglicht. Die Trägerplatte 21 ist mit den Trägern 19, 30 und 31 und mit den Rechteckprofilen 32, 33 und 34 in Form einer Schweißkonstruktion zu einer gemeinsamen Trageinheit verbunden.

Figur 3 zeigt eine Ansicht der Radaufhängung des linken Hinterrades 2 von hinten. Es ist die nach unten offene U-förmige Ausbildung des Radträgers 20 zu erkennen. An dem Radträger 20 sind die Dreieckslenker 16 und 17 sowie der Stoßdämpfer 18 schwenkbeweglich gelagert. Die anderen Enden des Dreieckslenkers 16 und des Stoßdämpfers 18 sind mit dem in den Figuren 1 und 2 gezeigten Träger 19 verbunden, wohingegen der Dreieckslenker 17 mit dem in Figur 2 gezeigten Träger 30 verbunden ist.

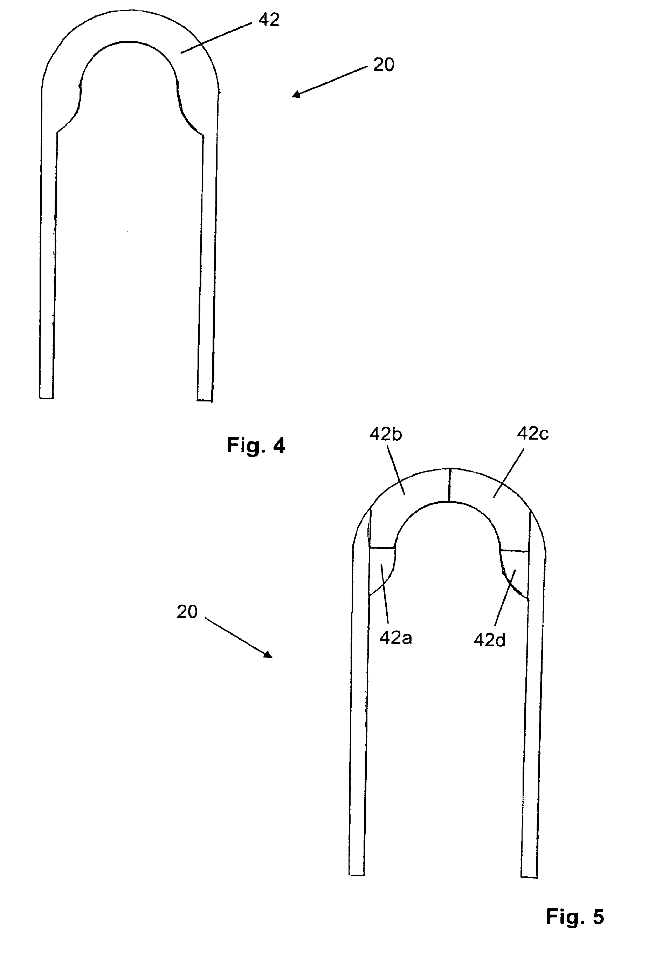

Die Figuren 4 und 5 zeigen Varianten des Radträgers 20, der mit beiden Enden der Radachse (nicht dargestellt) des Hinterrades (ebenfalls nicht dargestellt) verbunden ist. Bei den Ausführungsbeispielen in den Figuren 4 und 5 handelt es sich um Schweißkonstruktionen, bei den die beiden U-Schenkel Flacheisen sind, die mit einem diese verbindenden, gebogenen Rohr 42 (Figur 4) oder mehreren Rohrabschnitten 42a, 42b, 42c, 42d (Figur 5) verschweißt sind. Auf diese Weise ergibt sich eine hinreichende Stabilität gegen Verbiegung und Verwindung, insbesondere beim Bremsen.

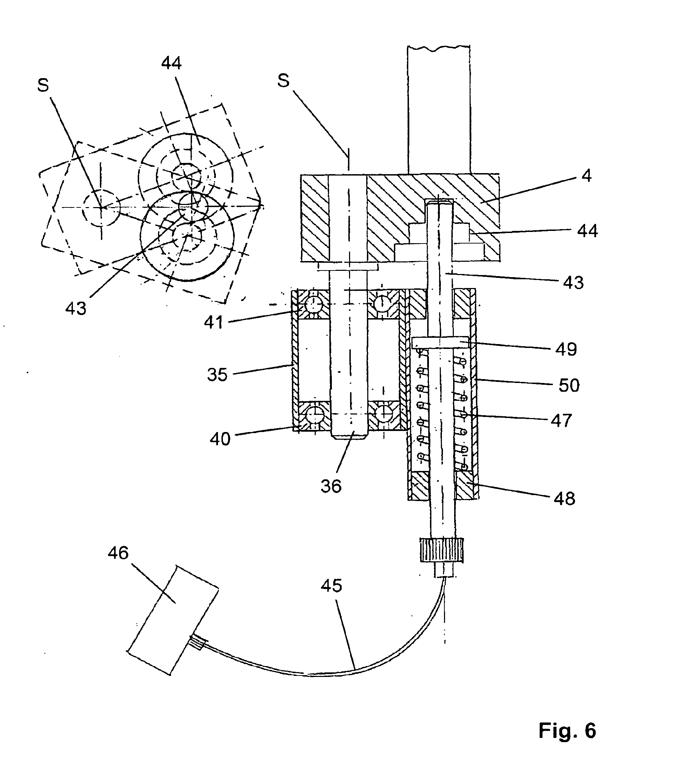

Die Figur 6 zeigt ein Ausführungsbeispiel einer verstellbaren Schwenkwinkelarretierung für das erfindungsgemäße Dreirad. Die Arretierung begrenzt den Winkel der Verschwenkung des Vorderteils 4 relativ zu dem Hinterteil 3 (nicht dargestellt), wobei der maximale Winkel der Verschwenkung einstellbar ist. Hierzu weist die Arretierung einen parallel zur Schwenkachse S und seitlich versetzt zu dieser angeordneten Bolzen 43 auf, der am Hinterteil axial beweglich geführt ist und der in eine am Vorderteil 4 angeordnete Stufenbohrung 44 unterschiedlich tief einfahrbar ist. Der maximale Schwenkwinkel hängt davon ab, wie tief der Bolzen 43 in die Stufenbohrung 44 eingefahren wird. Bei ganz eingefahrenem Bolzen 43, wie in Figur 6 gezeigt, ist die Schwenkbewegung vollständig blockiert. Bei nur teilweise eingefahrenem Bolzen ergibt sich der maximale Schwenkwinkel aus dem Durchmesser der Stufenbohrung in der entsprechenden Tiefe. Dies ist in der gestrichelten Schnittdarstellung in Figur 6 illustriert. Bei ganz ausgefahrenem Bolzen sind Vorderteil 4 und Hinterteil 3 relativ zueinander frei beweglich. Die Axialbewegung des Bolzens 43 wird vom Fahrer mittels eines in den Bedienbereich des Dreirads (z.B. zum Lenker) geführten Bowdenzugs 45 gesteuert. Am Ende des Bowdenzugs 45 ist hierzu ein Bedienelement 46 (z.B. wie bei einer herkömmlichen Nabenschaltung) vorgesehen. Die axiale Verstellung des Bolzens 43 erfolgt dabei gegen die Kraft einer Druckfeder 47, die einerseits an einem festen Anschlag 48 und andererseits an einem am Bolzen 43 angebrachten Anschlag 49 anliegt. Zur Lagerung des Bolzens 43 am Hinterteil 3 dient bei dem Ausführungsbeispiel eine Hülse 50, die fest mit dem Hinterteil 3 verbunden ist. Die Hülse 50 ist bevorzugt zusammen mit dem Rohr 35 and dem Träger 31 (siehe Figur 2) befestigt.

## Patentansprüche

1. Dreirad (1) mit einem ein Vorderrad haltenden Vorderteil (4) und einem zwei Hinterräder haltenden Hinterteil (3), wobei das Vorderteil (4) über ein Gelenk mit dem Hinterteil (3) verbunden ist, wobei das Gelenk eine Verschwenkung des Vorderteils (4) relativ zu dem Hinterteil (3) um eine im Wesentlichen in Längsrichtung des Dreirades (1) ausgerichtete Schwenkachse (S) ermöglicht, wobei das Vorderteil (4) über einen bezüglich der vorwärtsgerichteten Fahrtrichtung des Dreirades (1) rechts angeordneten Zugmitteltrieb (13) mit dem Hinterteil (3) verbunden ist, wobei der Zugmitteltrieb (13) ausschließlich mit dem bezüglich der vorwärtsgerichteten Fahrtrichtung des Dreirades (1) links angeordneten linken Hinterrad (2) gekoppelt ist und abtriebseitig ein Freilaufritzel (14) aufweist, das an einem Endabschnitt einer ortsfest an dem Hinterteil (3) angeordneten Antriebswelle (7) gelagert ist und wobei an dem Hinterteil (3) wenigstens ein Hilfsmotor (12) angeordnet ist, der auf die Antriebswelle (7) über einen dritten Zugmitteltrieb (5) einwirkt, wobei der dritte Zugmitteltrieb (5) ein drittes Freilaufritzel (6) aufweist, das an der Antriebswelle (7) angeordnet ist, **dadurch gekennzeichnet, dass**
am anderen Endabschnitt der Antriebswelle (7) ein zweites Freilaufritzel (8) eines zweiten Zugmitteltriebs (9) angeordnet ist, über den die Antriebswelle (7) mit dem linken Hinterrad (2) verbunden ist.

2. Dreirad (1) nach Anspruch 1, **dadurch gekennzeichnet, dass** das linke Hinterrad (2) eine Nabenschaltung (15) aufweist.

3. Dreirad (1) nach einem der vorhergehenden Ansprüche, **dadurch gekennzeichnet, dass** die Hinterräder (2) jeweils an einem Radträger (20) angeordnet sind, der mit beiden Enden der Radachse (10) eines Hinterrades (2) verbunden ist.

4. Dreirad (1) nach Anspruch 3, **dadurch gekennzeichnet, dass** die Radträger (20) U-förmig ausgebildet sind.

5. Dreirad (1) nach einem der vorhergehenden Ansprüche, **dadurch gekennzeichnet, dass** die Antriebswelle (7) rohrförmig ausgebildet ist.

6. Dreirad (1) nach einem der vorhergehenden Ansprüche, **gekennzeichnet durch** einen an dem Hinterteil (3) angeordneten, parallel zu dem Hilfsmotor (12) geschalten zweiten Hilfsmotor, der auf die Antriebswelle (7) über einen vierten Zugmitteltrieb einwirkt, wobei der vierte Zugmitteltrieb ein viertes Freilaufritzel aufweist, das an der Antriebswelle (7) angeordnet ist.

7. Dreirad (1) nach einem der vorhergehenden Ansprüche, **dadurch gekennzeichnet, dass** an der Antriebswelle (7) Außengewinde angeordnet sind, über die die Freilaufritzel (6, 8, 14) an der Antriebswelle (7) befestigbar sind.

8. Dreirad (1) nach einem der vorhergehenden Ansprüche, **dadurch gekennzeichnet, dass** die Antriebswelle (7) über zwei, drei oder mehr Lager (23, 24) drehbar an dem Hinterteil (3) gelagert ist.

9. Dreirad (1) nach Anspruch 8, **dadurch gekennzeichnet, dass** wenigstens eines der Lager (23, 24) ein Gehäuselager mit einem an dem Hinterteil festlegbaren Gehäuse (26) und einem darin angeordneten Wälzlager (25) ist.

## Claims

1. Tricycle (1) comprising a front part (4) holding a front wheel and a rear part (3) holding two rear wheels, wherein the front part (4) is connected to the rear part (3) by a joint, wherein the joint allows a pivoting of the front part (4) relatively to the rear part (3) around a swivel axis, which is aligned substantially in longitudinal direction of the tricycle (1), wherein the front part (4) is connected to the rear part (3) by a traction mechanism drive (13) which is arranged on the right side in respect of the forward-looking direction of the tricycle (1), wherein the traction mechanism drive (13) is solely coupled with left rear wheel (2) in respect of the forward-looking direction of the tricycle (1) and the traction mechanism drive (13) comprises a freewheel pinion (17) output-sided which is mounted to an end portion of a drive shaft (7) which is stationary attached to the rear part (3) and wherein at the rear part (3) at least one auxiliary motor (12) is arranged, which acts on the drive shaft (7) by a third traction mechanism drive (5), wherein the third traction mechanism drive (5) comprises a third freewheel pinion (6) that is arranged to the drive shaft (7), **characterized in that** at the other end portion of the drive shaft (7) a second freewheel pinion (8) of a second traction mechanism drive (9) is arranged by which the drive shaft (7) is connected to the left rear wheel (2).

2. Tricycle (1) according to claim 1, **characterized in that** the left rear wheel (2) comprises a gear hub (15).

3. Tricycle (1) according to one of the proceeding claims, **characterized in that** that the rear wheels (2) are each arranged to a wheel carrier (20) which is connected with both ends of the wheel axle of a rear wheel (2).

4. Tricycle (1) according to claims 3, **characterized in that** the wheel carrier (20) is U-shaped.

5. Tricycle (1) according to one of the proceeding claims, **characterized in that** the drive shaft (7) is tubular.

6. Tricycle (1) according to one of the proceeding claims, **characterized in that** a second auxiliary motor which is attached to the rear part (3) and which is switched parallel to the auxiliary motor (12), acts on the drive shaft (7) by a forth traction mechanism drive, wherein the forth traction mechanism drive has a forth freewheel pinion which is attached to the drive shaft (7)

7. Tricycle (1) according to one of the proceeding claims, **characterized in that** male thread are arranged on the drive shaft (7) by which the freewheel pinions (6, 8, 14) are attachable to the drive shaft (7).

8. Tricycle (1) according to one of the proceeding claims, **characterized in that** the drive shaft (7) is rotatable mounted to the rear part (3) by two, three or more bearings (23, 24).

9. Tricycle (1) according to claim 8, **characterized in that** at least one of the bearings (23, 24) is a bearing housing with a housing (26) that is securable to the rear part and wherein a rolling bearing (25) is arranged in the housing (26).

## Revendications

1. Tricycle (1), comportant une partie avant (4) portant une roue avant, et une partie arrière (3) portant deux roues arrière, la partie avant (4) étant reliée par une articulation à la partie arrière (3), ladite articulation permettant un pivotement de la partie avant (4) par rapport à la partie arrière (3) autour d' un axe de pivotement (S) orienté sensiblement dans la direction longitudinale du tricycle (1), la partie avant (4) étant reliée à la partie arrière (3) par l'intermédiaire d'un système d'entraînement à traction (13), disposé à droite par référence au sens de déplacement vers l'avant du tricycle (1), ledit système d'entraînement à traction (13) étant couplé exclusivement à la roue arrière (2) gauche, disposée à gauche par référence au sens de déplacement vers l'avant du tricycle (1), et comportant, du côté sortie, un pignon fou (14), qui est monté sur une zone d'extrémité d'un arbre d'entraînement (7) monté fixe sur la partie arrière (3), et au moins un moteur auxiliaire (12) étant disposé sur la partie arrière (3), lequel agit sur l'arbre d'entraînement (7) par l'intermédiaire d'un troisième système d'entraînement à traction (5), ledit troisième système d'entraînement à traction (5) comportant un troisième pignon fou (6) qui est disposé sur l'arbre d'entraînement (7),
**caractérisé en ce que** sur l'autre zone d'extrémité de l'arbre d'entraînement (7) est disposé un deuxième pignon fou (8) d'un deuxième système d'entraînement à traction (9), par l'intermédiaire duquel l'arbre d'entraînement (7) est relié à la roue arrière (2) gauche.

2. Tricycle (1) selon la revendication 1, **caractérisé en ce que** la roue arrière (2) gauche comporte un moyeu à vitesses intégrées (15).

3. Tricycle (1) selon l'une quelconque des revendications précédentes, **caractérisé en ce que** les roues arrière (2) sont montées chacune sur un support de roue (20), qui est relié aux deux extrémités de l'essieu (10) d'une roue arrière (2).

4. Tricycle (1) selon la revendication 3, **caractérisé en ce que** les supports de roue (20) sont réalisés en forme de U.

5. Tricycle (1) selon l'une quelconque des revendications précédentes, **caractérisé en ce que** l'arbre d'entraînement (7) est réalisé en forme de tube.

6. Tricycle (1) selon l'une quelconque des revendications précédentes, **caractérisé par** un deuxième moteur auxiliaire, qui est disposé sur la partie arrière (3), est monté en parallèle avec le moteur auxiliaire (12) et agit sur l'arbre d'entraînement (7) par l'intermédiaire d'un quatrième système d'entraînement à traction, ledit quatrième système d'entraînement à traction comportant un quatrième pignon fou qui est disposé sur l'arbre d'entraînement (7).

7. Tricycle (1) selon l'une quelconque des revendications précédentes, **caractérisé en ce que** sur l'arbre d'entraînement (7) sont disposés des filets extérieurs par l'intermédiaire desquels les pignons fous (6, 8, 14) peuvent être fixés sur l'arbre d'entraînement (7).

8. Tricycle (1) selon l'une quelconque des revendications précédentes, **caractérisé en ce que** l'arbre d'entraînement (7) est monté rotatif sur la partie arrière (3) par l'intermédiaire de deux, trois paliers (23, 24) ou plus.

9. Tricycle (1) selon la revendication 8, **caractérisé en ce qu'**au moins un des paliers (23, 24) est un palier à roulement comportant un boîtier (26) pouvant être fixé à la partie arrière et un roulement (25) monté à l'intérieur dudit boîtier.
